# EUROPÄISCHE PATENTSCHRIFT

(11) **EP 1 363 197 B1**
(45) Veröffentlichungstag und Bekanntmachung des Hinweises auf die Patenterteilung: **10.09.2008**
(21) Anmeldenummer: 03007718.4
(22) Anmeldetag: 04.04.2003
(51) Int. Cl.: G06F 13/38, G05B 19/042

(54) **System zur Datenübertragung zwischen Mikrocomputereinrichtungen**
System for transferring data between microcomputer devices
Système pour transférer des données entre des appareils de micro-ordinateur

(30) Priorität: 23.04.2002 DE 10218037
(43) Veröffentlichungstag der Anmeldung: 19.11.2003
(73) Patentinhaber: PHOENIX CONTACT GmbH & Co. Kg, 32825 Blomberg (DE)
(72) Erfinder: Esch, Rainer, 32825 Blomberg (DE); Engel, Andreas, 32816 Schieder-Schwalenberg (DE)
(74) Vertreter: Blumbach - Zinngrebe

(56) Entgegenhaltungen:
- US-A- 6 061 601
- US-A- 6 138 174
- GENUA MBH: "GeNUGate 2.1 - Installations- und Konfigurationshandbuch" August 1999 (1999-08), GENUA MBH , KIRCHHEIM , XP002327904 Seiten 1/5 - 1/8

## Beschreibung

Die Erfindung betrifft ein System zur Datenübertragung zwischen Mikrocomputereinrichtungen gemäß dem Oberbegriff des Anspruchs 1.

Aus dem Stand der Technik sind Systeme zur Datenübertragung bekannt, bei welchen die Entkopplung der zugreifenden Einheiten über eine Multiport-RAM Speichervorrichtung erfolgt. Die Multiport-RAM Speichervorrichtung dient dabei als Koppelvorrichtung für Daten zwischen den zugreifenden Einheiten.

Eine Multiport-RAM Speichervorrichtung mit zwei Ports ist in "IDT High-Speed 3.3 V 1Kx8 Dual-Port Static RAM, September 1999" beschrieben. Alle Daten- Adress- und Steuersignale werden parallel an die beschriebene Speichervorrichtung angeschlossen. Die daraus resultierende hohe Anzahl von Signalen ist nachteilig, wenn die zugreifenden Einheiten voneinander galvanisch getrennt werden oder noch weitere zugreifende Einheiten hinzugefügt werden sollen. Die Ansteuerung der beschriebenen Speichervorrichtung erfordert einen gewissen Aufwand, da Zugriffskonflikte sowohl von der Speichervorrichtung als auch von den zugreifenden Einheiten behandelt werden müssen.

In "PCI 9050, PLX Technology, Inc. 1996" ist ein Protokoll-Controller zur Datenübertragung zwischen einer ersten Mikrocomputereinrichtung, enthaltend einen ersten Mikroprozessorbus, hier als Local Bus bezeichnet, und einen standardisierten Datenbus, hier als PCI Bus bezeichnet, beschrieben. Der PCI Bus dient dabei als Signalverbindung zwischen zwei miteinander Daten übertragenden Mikrocomputereinrichtungen. Funktionale Trennungen können nur dadurch erreicht werden, dass alle Signale zum PCI Bus abgeschaltet, also in den hochohmigen Zustand (TRI-State) geschaltet werden. Eine galvanische Trennung zwischen zwei derartigen Mikrocomputereinrichtungen ist nicht oder mit sehr hohem Aufwand möglich, da die Anzahl der parallelen Signale sehr hoch ist. Ergänzend hierzu ist in "IBS PCI DDK UM, Phoenix Contact, 7/2001" eine Mikrocomputereinrichtung, hier alsINTERBUS-Anschaltbaugruppe für PCI bezeichnet, welche für eine Datenübertragung über den standardisierten; PCI Bus geeignet ist, beschrieben.

Eine weitere Multiport Speichervorrichtung ist aus DE 199 61 138 C2 bekannt. Hier werden die Zugriffe mehrerer zugreifender Einheiten mittels eines Zeitmultiplexsystems auf ein Single-Port-RAM ermöglicht. Zur Bereitstellung von Steuersignalen und den Adresssignalen werden Serien-Parallelwandler eingesetzt und Zeitschlitzzuordnungseinheiten zur Zuordnung und Einteilung der Zugriffssteuerung verwendet. Die Zeitschlitzzuordnungseinheiten sind dabei als Steuereinheiten ausgebildet, welche einen sehr hohen Implementierungsaufwand bzw. Programmieraufwand erfordern. Für jede Anzahl von zugreifenden Einheiten ist eine eigene Implementierung bzw. Programmierung erforderlich. Die Serien-Parallelwandler wandeln dabei seriell anfallende Signale derart, dass diese parallel an den entsprechenden Ports des Multiport-RAMs anliegen. Um mehrere Ports bedienen zu können, sind für jeden Port jeweils alle Datensignale, Steuersignale und Adresssignale erforderlich, wodurch sich eine sehr große Anzahl von Signalen am Multiport-RAM ergibt.

In DE 100 26.416 A1 ist ein System zur Datenübertragung offenbart, welches eine serielle Verbindung zwischen zwei Mikrocomputereinrichtungen in der Art entkoppelt, dass die zu sendenden oder empfangenen Daten zwischengespeichert werden, und somit die Mikrocomputereinrichtungen unabhängig vom Takt der zusendenden Daten oder zu empfangenen Daten macht.

Die Funktionen der bekannten Komponenten für die Datenübertragung über Ethernet sind in "Ethernet in der Automatisierungstechnik, 2000 by Phoenix Contact GmbH & Co" beschrieben. Hier sind die grundsätzlichen Funktionen von HUBs und Switches beschrieben. Diese Komponenten ermöglichen eine Aufteilung von Systemen zur Datenübertragung in Segmente. Innerhalb der Segmente können sich mehrere Mikrocomputereinrichtungen befinden, welche miteinander Daten übertragen. Die Mechanismen nach bekanntem Ethernet-Standard zur Adressierung der Mikrocomputereinrichtungen sind hier schematisch beschrieben.

Aus "GeNUGate 2.1 - Installations- und Konfigurations-handbuch", August 1999, Genua mbH, Kirchheim, ist ferner ein System bekannt, bei welchem zwei physikalisch getrennte Rechner, ein Router und ein Applikations-Server, in einem Gehäuse integriert sind.

In US 6 061 601 A wird ferner ein redundantes Datenverarbeitungssystem mit zwei programmierbaren Logiksteuergeräten in Tandembetrieb beschrieben, wobei für jedes der Logiksteuergeräte jeweils eine Spannungsversorgung vorgesehen ist. Die Logiksteuergeräte sind über eine serielle Datenverbindung, sowie über eine spezielle Überwachungsschaltung miteinander verbunden, und somit nicht galvanisch voneinander getrennt.

### Aufgabenstellung

Der Erfindung liegt die Aufgabe zugrunde, ein System zur Datenübertragung zwischen Mikrocomputereinrichtungen bereitzustellen. Die Mikrocomputereinrichtungen können dabei unabhängig voneinander abgeschaltet werden, wobei die jeweils noch verbleibenden eingeschalteten

Mikrocomputereinrichtungen in ihrem Betrieb und ihrer Spannungsversorgung nicht beeinflusst werden dürfen. Um die hierfür notwendige galvanische Trennung zwischen den Mikrocomputereinrichtungen bereitzustellen, sollte die Anzahl der zu koppelnden Signale möglichst gering gehalten werden. Die Verwendung von Standard-Komponenten zur Datenübertragung ist dabei zu bevorzugen, um einen möglichst geringen Implementierungsaufwand zu erreichen. Eine Erhöhung der Anzahl der miteinander Daten übertragenden Mikrocomputereinrichtungen soll möglich sein. Das erfindungsgemäße System ist auch für die Datenübertragung zwischen mindestens einer Mikrocomputereinrichtung und mindestens einer Zusatzeinrichtung, wie Einsteckkarte oder Speicher, Anschaltbaugruppe für ein Feldbussystem geeignet.

### Lösung der Aufgabe

Die Aufgabe wird erfindungsgemäß durch die im Anspruch 1 angegebenen Merkmale gelöst. Beim erfindungsgemäßen System zur Datenübertragung zwischen Mikrocomputereinrichtungen enthält jeweils jede Mikrocomputereinrichtungen als Koppelvorrichtung für die Daten statt der bekannten Multiport-RAMs einen standardmäßigen Protokoll-Controller, beispielsweise einen aus dem Stand der Technik bekannten Ethernet-Controller. Ein derartiger Protokoll-Controller enthält Anschlussvorrichtungen für einen Mikroprozessorbus mit parallelen Signalen für einen Mikroprozessor oder beispielsweise einen parallelen Standard PCI Bus und eine oder mehrere Anschlussvorrichtungen für die seriellen Datensignale zur Datenübertragung, beispielsweise Ethernet. Die Adressierung und Zugriffssteuerung einer Mikrocomputereinrichtung von einer anderen Mikrocomputereinrichtung aus erfolgt mit den bereits in dem Protokoll-Controller, beispielsweise einen Ethernet-Controller, implementierten Standardfunktionen. Zugriffskonflikte, Adressierungen und sonstige zum Datenzugriff notwendige Funktionen werden in diesem Protokoll-Controller ausgeführt. Die räumliche Anordnung der miteinander datenübertragenden Mikrocomputereinrichtungen ist für das erfindungsgemäße System nicht festgelegt, so dass mindestens zwei Mikrocomputereinrichtungen innerhalb eines Gerätes angeordnet sein können. Es ist auch denkbar, dass beide miteinander datenübertragenden Mikrocomputereinrichtungen einem einzigem Board beziehungsweise Leiterplatte angeordnet sind. Die miteinander zu koppelnden Mikrocomputereinrichtungen können jeweils eine eigene Spannungsversorgung enthalten, so dass in diesem Falle nur die seriellen Datensignale eine galvanische Trennung über Optokoppler oder anderen Vorrichtungen erhalten. Dies erfordert im Falle einer beispielhaften Ethernet Verbindung nur die galvanische Trennung von vier Signalleitungen. Die Ankopplung von weiteren Mikrocomputereinrichtungen an einem bereits bestehendem System von Mikrocomputereinrichtungen ist in einfacher Weise mittels bekannten HUBs oder Switches möglich. Die gesamte Zugriffssteuerung erfordert dabei keine Änderung des bestehenden Systems von Mikrocomputereinrichtungen. Auch räumlich entfernte Mikrocomputereinrichtungen können in einfacher und bekannter Art und Weise mittels einer zusätzlichen Leitungsverbindung in ein bestehendes System zur Datenübertragung zwischen Mikrocomputereinrichtungen zusätzlich eingefügt werden.

### Bezugzeichenliste

- 1:: erste Mikrocomputereinrichtung
- 2:: erster Mikroprozessor
- 3:: erster Mikroprozessorbus
- 4:: erste Koppelvorrichtung, erster Protokoll-Controller
- 5:: serielle Datensignale in der ersten Mikrocomputereinrichtung
- 6:: Spannungsversorgungsbereich der ersten Mikrocomputereinrichtung
- 7:: Galvanische Trennung
- 8:: zweite Mikrocomputereinrichtung
- 9:: zweiter Mikroprozessor
- 10:: zweiter Mikroprozessorbus
- 11:: zweite Koppelvorrichtung, zweiter Protokoll-Controller
- 12:: serielle Datensignale in der zweiten Mikrocomputereinrichtung
- 13:: Spannungsversorgungsbereich der zweiten Mikrocomputereinrichtung
- 14:: übergeordnete Mikrocomputereinrichtung
- 15:: Ethernet Switch
- 16:: erste serielle Datenverbindung
- 17:: zweite serielle Datenverbindung
- 18:: dritte Mikrocomputereinrichtung
- 19:: Kabel
- 20:: erste parallel angeschlossene Mikrocomputereinrichtung
- 21:: zweite parallel angeschlossene Mikrocomputereinrichtung
- 22:: Multiport-RAM
- 23:: erster Port
- 24:: zweiter Port

### Überschrift der Figuren:

Fig. 1: zeigt ein System zur Datenübertragung zwischen zwei Mikrocomputereinrichtungen.

Fig. 2: zeigt ein System zur Datenübertragung mit mehr als zwei Mikrocomputereinrichtungen.

Fig. 3: zeigt ein System zur Datenübertragung zwischen zwei Mikrocomputereinrichtungen nach aus dem Stand der Technik bekannter Art.

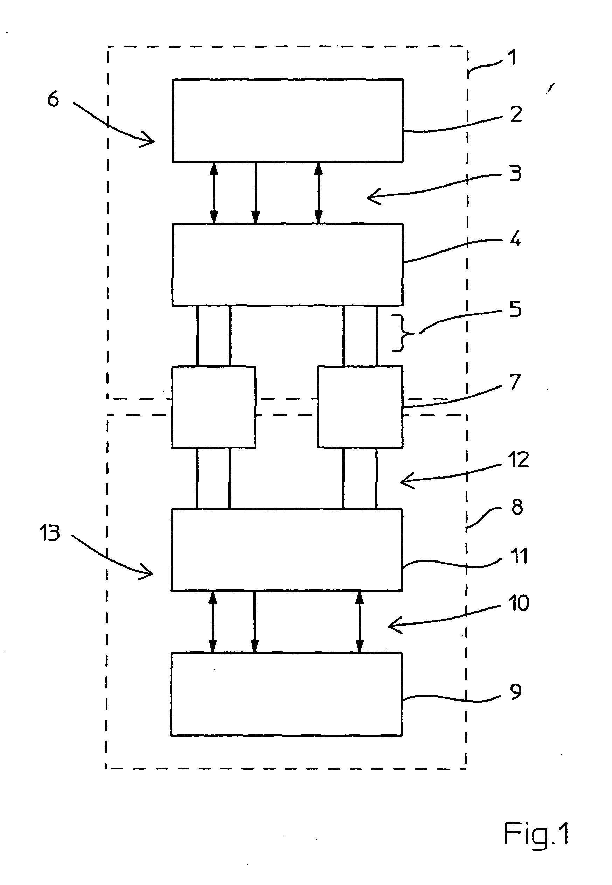

In **FIG. 1** sind die funktionalen Einheiten für ein System zur Datenübertragung zwischen zwei Mikrocomputereinrichtungen dargestellt. Es sind nur die zur Darstellung des erfindungsgemäßen Systems notwendigen Komponenten dargestellt, die Funktion der jeweiligen Mikrocomputereinrichtungen ist für die Beschreibung nicht relevant. Die beiden Mikrocomputereinrichtungen sind in dem beschriebenen Beispiel auf einem für beide Mikrocomputereinrichtungen gemeinsamen Board angeordnet. Die erste Mikrocomputereinrichtung **1** enthält neben den Komponenten für seine Aufgabe, welche hier nicht näher beschrieben ist, mindestens die notwendigen Komponenten zur Datenübertragung mit mindestens einer zweiten Mikrocomputereinrichtung **2**. Für eine Datenübertragung von der ersten Mikrocomputereinrichtung 1 zur zweiten Mikrocomputereinrichtung **2** ist an dem in der ersten Mikrocomputereinrichtung **1** enthaltenden Mikroprozessor **2** über den sogenannten ersten Mikroprozessorbus **3** ein erster Protokoll-Controller **4** angeschlossen. Der erste Prozessorbus ist dabei parallel ausgeführt, in der Regel enthaltend Adresssignale, Steuersignale und Datensignale. Der Protokoll-Controller **4** ist im beschriebenen Beispiel ein standardmäßiger Ethernet-Controller, wie er bereits im Stand der Technik erwähnt ist. Dieser erste Protokoll-Controller **4** ist in der Lage, zu übertragende Daten seriell über die seriellen Datensignale **5** nach dem bekannten Ethernet-Standard auszugeben. Zum seriellen Datenempfang enthält die zweite Mikrocomputereinrichtung **8** ebenfalls einen Protokoll-Controller **11**, welcher die empfangenen seriellen Datensignale **12** als Daten für einen parallelen Zugriff des zweiten Zugriffes des zweiten Mikroprozessors **9** über den zweiten Mikroprozessorbus **10** zur Verfügung stellt. Der zweite Mikroprozessorbus **10** kann sich dabei in seiner Ausführung vom ersten Mikroprozessorbus **3** unterscheiden. Im vorliegenden Beispiel erfolgt die Signalverbindung der seriellen Datensignale **5** der ersten
Mikrocomputereinrichtung **1** mit den seriellen Datensignalen **12** der zweiten Mikrocomputereinrichtung über eine galvanische Trennung **7**, welche beispielsweise mit allgemein bekannten Optokopplern, magnetischen Kopplern oder kapazitiven Kopplern erfolgt. Im Falle einer galvanischen Trennung der seriellen Datensignale **5**, **12** kann der Spannungsversorgungsbereich **6** der ersten Mikrocomputereinrichtung **1** getrennt vom Spannungsversorgungsbereich **13** der zweiten Mikrocomputereinrichtung **2** aufgebaut werden. Die Datenübertragung von der zweiten Mikrocomputereinrichtung **2** zur ersten Mikrocomputereinrichtung **1** erfolgt dabei in der gleichen Art und Weise, jedoch in umgekehrter Richtung. In umgekehrter Richtung bedeutet, dass die Datenübertragung von der zweiten Mikrocomputereinrichtung **8** zur ersten Mikrocomputereinrichtung **1** erfolgt, so dass in diesem Falle der zweite Mikroprozessor die zu übertragenden Daten über seinen zweiten Mikroprozessorbus **10** an den zweiten Protokoll-Controller **11** übergibt, wobei der zweite Protokoll-Controller **11** ist in der Lage, die zu übertragenden Daten seriell über die seriellen Datensignale **12**, **5** nach dem bekannten Ethernet-Standard an die erste Mikrocomputereinrichtung **1** zu übertragen, mit oder ohne galvanische Trennung **7.**

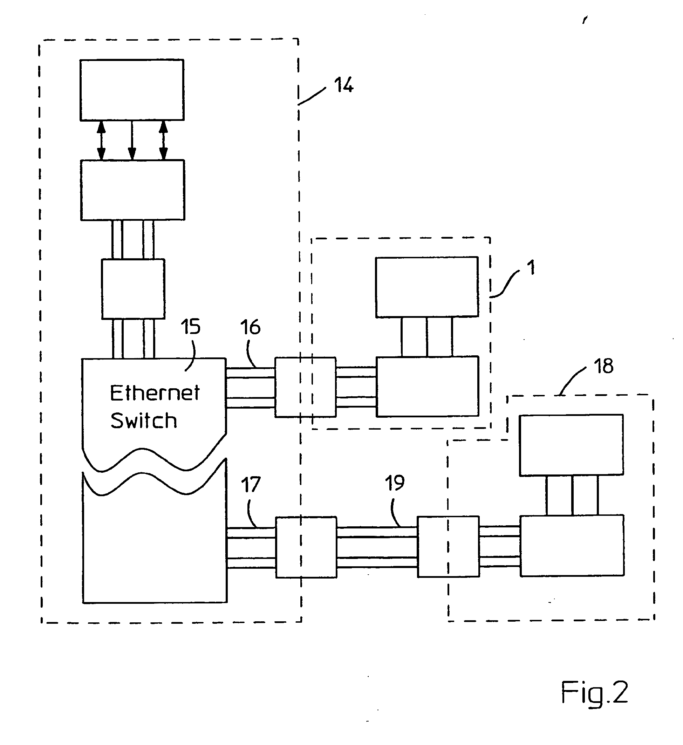

In **FIG. 2** ist ein System zur Datenübertragung zwischen mehr als zwei Mikrocomputereinrichtungen in einer Übersicht dargestellt. Eine übergeordnete Mikrocomputereinrichtung **14** enthält zusätzlich zu den für seine Funktion relevanten Komponenten und den oben beschriebenen Komponenten zur Datenübertragung einen im Stand der Technik beschriebenen und damit allgemein bekannten Ethernet-Switch **15**. Dieser Ethernet-Switch dient nur zur Bereitstellung von mehr als einer seriellen Datenverbindung, so dass an der ersten seriellen Datenverbindung **16** eine zweite Mikrocomputereinrichtung **8**, an der zweiten an der zweiten seriellen Datenverbindung **17** eine dritte Mikrocomputereinrichtung **18**.

Selbstverständlich können beim erfindungsgemäßen System zur Datenübertragung auch eine oder mehrere Mikrocomputereinrichtungen mit Hilfe eines Kabels **19**, beispielsweise eines standardmäßigen Ethernetkabels, miteinander verbunden werden. Auch die Kombination von räumlich miteinander verbundenen Mikrocomputereinrichtungen und räumlich entfernten Mikrocomputereinrichtungen ist möglich.

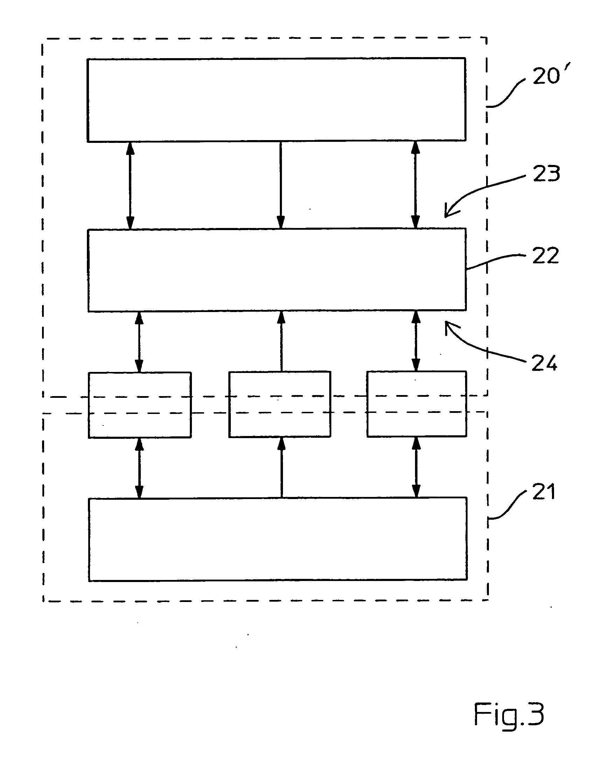

**FIG. 3** zeigt beispielhaft ein System zur parallelen Datenübertragung zwischen zwei Mikrocomputereinrichtungen **20**, **21** in paralleler Art und Weise. Eine erste parallel angeschlossene Mikrocomputereinrichtung **20** enthält für die Datenverbindung ein sogenanntes Multiport-RAM **22**, welches bei einer Datenübertragung zur zweiten parallel angeschlossenen Mikrocomputereinrichtung **21** mit den zu übertragenden Daten und Adressierungsinformationen über den ersten Port **23** beschrieben wird. Die zweite parallel angeschlossene Mikrocomputereinrichtung **21** kann über den zweiten Port **24** des Multiport-RAM **22** diese für sie bestimmten Daten lesen. Es versteht sich von selbst, dass die Datenübertagung auch in die andere Richtung möglich ist, also ausgehend von der zweiten parallel angeschlossene Mikrocomputereinrichtung **21** zur ersten parallel angeschlossene Mikrocomputereinrichtung **20**.

## Patentansprüche

1. System zur Datenübertragung zwischen Mikrocomputereinrichtungen (1, 8), welche jeweils mindestens einen Mikroprozessor (2, 9), einen Mikroprozessorbus (3, 10), daran angeschlossen eine Koppelvorrichtung (4, 11), die Koppelvorrichtung (4, 11) ein serielles Protokoll bereitstellt, enthalten, wobei die Datenübertragung zwischen den Mikrocomputereinrichtungen (1, 8) über die Koppelvorrichtungen erfolgt, **dadurch gekennzeichnet**
**dass** die Mikrocomputereinrichtungen (1, 8) räumlich auf einem Board innerhalb eines Gerätes angeordnet sind, **wobei die serielle Datenverbindung (5, 12) zwischen den Mikrocomputereinrichtungen (1, 8) eine galvanische Trennung (7) enthält,** und dass jede Mikrocomputereinrichtung (1, 8) jeweils einem eigenen, separaten Spannungsversorgungsbereich (6, 13) zugehört und
die Koppelvorrichtungen (4, 11) ein standardisiertes serielles Protokoll bereitstellen, wobei die Spannungsversorgungsbereiche (6, 13) der Mikrocomputereinrichtungen (1, 8) einzeln abschaltbar oder zuschaltbar sind und der jeweils verbleibende eingeschaltete Spannungsversorgungsbereich (6, 13) einer Mikrocomputereinrichtung (1, 8) unbeeinflusst bleibt.

2. System nach Anspruch 1,
**dadurch gekennzeichnet,**
**dass** für die serielle Datenübertragung zwischen den Mikrocomputereinrichtungen (1, 8) das standardisierte serielle Ethernet Protokoll verwendet wird.

3. System nach Anspruch 1 oder 2,
**dadurch gekennzeichnet,**
**dass** zusätzlich zu den zwei miteinander datenübertragenden Mikrocomputereinrichtungen (14, 8) wenigstens eine weitere Mikrocomputereinrichtung (18) in das System eingefügt werden kann.

4. System nach einem der Ansprüche 1 bis 3,
**dadurch gekennzeichnet,**
**dass** in wenigstens einer Mikrocomputereinrichtung (14) zur Ankopplung mehrerer weiterer Mikrocomputereinrichtungen (1, 18) ein Ethernet-Switch (15) verwendet wird.

5. System nach einem der Ansprüche 1 bis 4,
**dadurch gekennzeichnet,**
**dass** mindestens eine Mikrocomputereinrichtung (18) räumlich entfernt über ein Kabel (19) mit der übergeordneten Mikrocomputereinrichtung (14) verbunden ist.

6. System nach **einem der Ansprüche 1 bis 5**,
**dadurch gekennzeichnet,**
**dass** die galvanische Trennung (7) mittels Optokoppler erfolgt.

7. System nach **einem der Ansprüche 1 bis 5**,
**dadurch gekennzeichnet,**
**dass** die galvanische Trennung (7) mittels magnetischer Koppler erfolgt.

8. System nach **einem der Ansprüche 1 bis 5**,
**dadurch gekennzeichnet,**
**dass** die galvanische Trennung (7) mittels kapazitiver Koppler erfolgt.

## Claims

1. System for transferring data between microcomputer devices (1, 8) which each contain at least one microprocessor (2, 9), a microprocessor bus (3, 10), a coupling device (4, 11) connected thereto, the coupling device (4, 11) providing a serial protocol, wherein the data is transferred between the microcomputer devices (1, 8) via the coupling devices, **characterised in that** the microcomputer devices (1, 8) are disposed spatially on a board within an apparatus, wherein the serial data connection (5, 12) between the microcomputer devices (1, 8) contains an electrical isolation (7), and **in that** each microcomputer device (1, 8) belongs to its own, separate power supply region (6, 13) and the coupling devices (4, 11) provide a standardised serial protocol, wherein the power supply regions (6, 13) of the microcomputer devices (1, 8) can be switched on or off individually and the respective remaining, switched-on power supply region (6, 13) of a microcomputer device (1, 8) remains unaffected.

2. System as claimed in Claim 1, **characterised in that** the standardised serial Ethernet protocol is used for the serial data transfer between the microcomputer devices (1, 8).

3. System as claimed in Claim 1 or 2, **characterised in that** in addition to the two microcomputer devices (14, 8) involved in the mutual data transfer, at least one further microcomputer device (18) can be incorporated into the system.

4. System as claimed in any one of Claims 1 to 3, **characterised in that** in at least one microcomputer device (14), an Ethernet switch (15) is used to connect several further microcomputer devices (1, 18).

5. System as claimed in any one of Claims 1 to 4, **characterised in that** at least one microcomputer device (18) is connected to the higher-level microcomputer device (14) in a spatially remote manner via a cable (19).

6. System as claimed in any one of Claims 1 to 5, **characterised in that** the electrical isolation (7) is effected by means of photocouplers.

7. System as claimed in any one of Claims 1 to 5, **characterised in that** the electrical isolation (7) is effected by means of magnetic couplers.

8. System as claimed in any one of Claims 1 to 5, **characterised in that** the electrical isolation (7) is effected by means of capacitive couplers.

## Revendications

1. Système de transmission de données entre des appareils de micro-ordinateur (1, 8), qui comprennent chacun au moins un microprocesseur (2, 9), un bus de microprocesseur (3, 10), un dispositif de couplage (4, 11) raccordé au bus, lequel dispositif de couplage (4, 11) met à disposition un protocole série, la transmission de données entre les appareils de micro-ordinateur (1, 8) s'effectuant par les dispositifs de couplage, **caractérisé en ce que**
les appareils de micro-ordinateur (1, 8) sont disposés dans l'espace sur une planche ("board") à l'intérieur d'un appareil, la liaison de données (5, 12) série entre les appareils de micro-ordinateur (1, 8) contenant une séparation (7) galvanique, et **en ce que** chaque appareil de micro-ordinateur (1, 8) appartient respectivement à une zone d'alimentation en tension (6, 13) propre et séparée, et les dispositifs de couplage (4, 11) mettent à disposition un protocole série standardisé, les zones d'alimentation en tension (6, 13) des appareils de micro-ordinateur (1, 8) pouvant être déconnectées ou connectées individuellement et la zone d'alimentation en tension (6, 13), enclenchée et restant à chaque fois, d'un appareil de micro-ordinateur (1, 8) reste sans influence.

2. Système selon la revendication 1,
**caractérisé en ce que**
le protocole Ethernet série standardisé est utilisé pour la transmission de données série entre les appareils de micro-ordinateur (1, 8).

3. Système selon la revendication 1 ou 2,
**caractérisé en ce que**,
en supplément des deux appareils de micro-ordinateur (14, 8) transmettant des données l'un avec l'autre, au moins un autre appareil de micro-ordinateur (18) peut être inséré dans le système.

4. Système selon l'une quelconque des revendications 1 à 3,
**caractérisé en ce qu'**un switch Ethernet (15) est utilisé dans au moins un appareil de micro-ordinateur (14) pour le rattachement de plusieurs autres appareils de micro-ordinateur (1, 18).

5. Système selon l'une quelconque des revendications 1 à 4,
**caractérisé en ce que**
au moins un appareil de micro-ordinateur (18) est relié, éloigné dans l'espace, par un câble (19) à l'appareil de micro-ordinateur (14) prioritaire.

6. Système selon l'une quelconque des revendications 1 à 5,
**caractérisé en ce que**
la séparation (7) galvanique s'effectue par optocoupleur.

7. Système selon l'une quelconque des revendications 1 à 5,
**caractérisé en ce que**
la séparation (7) galvanique s'effectue au moyen de coupleurs magnétiques.

8. Système selon l'une quelconque des revendications 1 à 5,
**caractérisé en ce que**
la séparation (7) galvanique s'effectue au moyen de coupleurs capacitifs.
